(19) Europäisches Patentamt
European Patent Office
Office européen des brevets

(11) Veröffentlichungsnummer: **0 276 434**
**A1**

(12) # EUROPÄISCHE PATENTANMELDUNG

(21) Anmeldenummer: **87118283.8**

(22) Anmeldetag: **10.12.87**

(30) Priorität: **24.12.86 DE 3644407**
**26.06.87 DE 3721074**

(43) Veröffentlichungstag der Anmeldung:
**03.08.88 Patentblatt 88/31**

(84) Benannte Vertragsstaaten:
**AT BE CH DE ES FR GB IT LI LU NL SE**

(51) Int. Cl.⁴: **H04N 7/137**, G06F 15/70

(71) Anmelder: **Licentia Patent-Verwaltungs-GmbH**
**Theodor-Stern-Kai 1**
**D-6000 Frankfurt/Main 70(DE)**

(72) Erfinder: **Kummerfeldt, Georg, Dipl.-Ing.**
**Bogenholzstrasse 12**
**D-7910 Neu-Ulm(DE)**
Erfinder: **Schwerzel, Wolfgang, Dr. rer. nat.**
**Joseph-Haydn-Strasse 8**
**D-7904 Erbach 2(DE)**

(74) Vertreter: **Schulze, Harald Rudolf, Dipl.-Ing. et al**
**Licentia Patent-Verwaltungs-GmbH**
**Theodor-Stern-Kai 1**
**D-6000 Frankfurt/Main 70(DE)**

(54) **Schaltungsanordnung zur Verschiebungsvektorsuche in der digitalen Bildanalyse.**

(57) Bei der Anordnung zur Verschiebungsvektorsuche in der digitalen Bildanalyse wird in einem Array-Rechenwerk (1) die Summe der Betragsdifferenzen von Bildpunktdaten zweier Bilder für mehr als ein Bildpunktpaar parallel berechnet und diese Summen in einem nachgeschalteten Akkumulator-Rechenwerk (2) aufaddiert. In einem dem Akkumulator-Rechenwerk nachgeschalteten Kontroll-Rechenwerk (3) wird durch Ermittlung des Minimums einer Anzahl derart aufaddierter Werte als Bewegungsvektor der Verschiebungsvektor ermittelt.

EP 0 276 434 A1

Xerox Copy Centre

# Schaltungsanordnung zur Verschiebungsvektorsuche in der digitalen Bildanalyse

Die Erfindung betrifft eine Anordnung zur Verschiebungsvektorsuche in der digitalen Bildanalyse gemäß dem Oberbegriff des Patentanspruchs 1.

Zur Übertragung von Bildtelefonszenen bei Übertragungsraten zwischen 64 kBit/s und 384 kBit/s werden Methoden der Prädiktionscodierung angewendet. Die Prädiktionscodierung nutzt die Information, die beim Empfänger berits vorhanden ist, aus, um das aktuelle Bild mit möglichst wenig Information zu beschreiben. Die Prädiktionscodierung wird erheblich verbessert, wenn die Bild-zu-Bild-Änderungen infolge Bewegungen in der Szene räumlich und zeitlich erfaßt und bei der Berechnung des prädizierten Bildes miteinbezogen werden (Prädiktionscodierung mit Bewegungskompensation). Bekannte Methoden zur Bewegungskompensation sind die z.B. in der EP O 123 616 beschriebene blockweise Bewegungskompensation und die z.B. in der DE-OS 33 28 341 beschriebene objektbezogene Bewegungskompensation. Den Verfahren ist gemeinsam, daß zwei Bilder, bestehend aus digitalisierten Bildpunkten für Luminanz und Chrominanz, im wesentlichen bildpunktweise miteinander verglichen werden. Die digitalisierten Bilder sind hierzu in regelmäßige Blockraster aufgeteilt.

Bei der blockweisen Bewegungskompensation wird schematisch das ganze zu prädizierende Bild abgearbeitet (ikonische Bildverarbeitung), wobei jedem Block des regelmäßigen (n • n) - Blockrasters diejenige Bild-zu-Bild-Verschiebung zugeordnet wird, für welche eine Abstandsmaß oder ein Ähnlichkeitsmaß zwischen dem Grauwertgebirge des betrachteten (aktuellen) Blockes und dem Grauwertgebirge eines entsprechend verschobenen Blockes im vorhergehenden Bild ein Minimum bzw. ein Maximum ist.

Bei der objektbezogenen Bewegungskompensation werden benachbarte bewegte (verschobene) Blöcke zu sogenannten Objekten zusammengefaßt und deren Bewegung durch mindestens einen, die Objektbewegung kennzeichnenden Bewegungsvektor (Verschiebungsvektor) eines Objektes beschrieben.

Zum Auffinden des Minimums des Abstandsmaßes zweier Blöcke wird, wie in Fig. 1 gezeigt, im aktuellen Bild eine konzentrisch liegende Untermenge des Blockes, bestehend aus s•s (s ≦ n) Bildpunkten, festgehalten und im vorhergehenden Bild für eine gleichroße Untermenge von s•s Bildpunkten (im folgenden als Meßfenster bezeichnet) als Abstandsmaß die Summe der Betragsdifferenzen

$$V_o = \sum_{i,k=0}^{s-1} \left| a_{ik} - b_{ik} \right|$$

gebildet. Hierin ist mit $a_{ik}$ der digitalisierte Grauwert des Bildpunktes im aktuellen, mit $b_{ik}$ der digtitalisierte Grauwert des Bildpunktes im vorhergehenden Bild bezeichnet. Im vorhergehenden Bild ist ein Suchbereich definiert, der sich um ±q Bildpunkte in x-und in y-Richtung konzentrisch um das unverschobene Meßfenster erstreckt. Das aufzufindende Minimum des Abstandsmaßes ist einer der $4 \bullet q^2$ möglichen Werte

$$V_d = \sum_{i,k=0}^{s-1} \left| a_{ik} - b_{lm} \right|$$

Hierbei sind die Indizes 1 und m eine Funktion der Verschiebung des Meßfensters.

Statt der Verwendung aller Bildpunkte innerhalb eines Meßfensters zur Berechnung der Summe der Betragsdifferenzen kann auch eine nach vorgegebenem Muster ausgewählte Untermenge verwendet werden, so daß weniger Recheoperationen durchzuführen sind.

Durch Ermittlung des Minimums $V_d = V_{dmin}$ dieser Werte ist ein Vektor definiert, der von der Blockmitte im aktuellen Bild zur Mitte des verschobenen Meßfensters zeigt und die Verschiebung eines Blockes in zwei zeitlich aufeinanderfolgenden Bildern ist. Dieser Vektor wird als Verschiebungsvektor $\vec{V}$ bezeichnet und das beschriebene Verfahren zum Auffinden des Minimums des Abstandsmaßes zweier Blöcke als Verschiebungsvektorsuche.

Der Erfindung liegt die Aufgabe zugrunde, die Ermittlung der Werte $V_d$ und die Bestimmung des Verschiebungsvektors $\vec{V}$ mit einer elektronischen Anordnung in Form eines monolithischen integrierten Schaltkreises in Echtzeit durchzuführen.

Die Aufgabe wird durch die im kennzeichnenden Teil des Anspruchs 1 angegebenen Merkmale gelöst. Die Anordnung ist im wesentlichen durch eine parallele Abarbeitung und Bildung der jeweiligen Betragsdifferenz zwischen zugehörigen Bildpunkten im aktuellen und vorhergehenden Bild charakterisiert. Vorteilhafte Ausgestaltungen und Weiterbildungen der Erfindung sind in den Unteransprüchen angegeben.

Das Problem des schnellen Speicherzugriffs bei paralleler Datenverarbeitung wird durch einen speziell organisierten Speicher gelöst, der dadurch charakterisiert ist, daß Daten der Wortbreite N seriell eingeschrieben werden und Daten der Wortbreite M • N, die ein ganzzahliges Vielfaches der eingeschriebenen Wortbreite haben, parallel ausgelesen werden.

Die Erfindung wird nun anhand eines Ausführungsbeispieles näher erläutert. Es zeigen im einzelnen:

Fig. 2: Blockschaltbild der Anordnung zur Verschiebungsvektorsuche gemäß der Erfindung;

Fig. 3: Anordnung der Speichermatrizen eines Speichers;

Fig. 4: Meßbereich mit 28•28 Bildpunkten;

Fig. 5: Funktionsbeispiel zum Speicherauslesen;

Fig. 6: Flußdiagramm zur Erläuterung der Arbeitsweise des Array-Rechenwerks;

Fig. 7: Schaltung zur Bildung der Betragsdifferenz zweier Dualzahlen im Zweierkomplement.

Das Blockschaltbild der Anordung zur Verschiebungsvektorsuche ist in Fig. 2 dargestellt. An einem Array-Rechenwerk 1 ist über einen Akkumulator 2 ein Kontroll-Rechenwerk 3 angeschlossen. Das Kontroll-Rechenwerk hat einen Anschluß zur Eingabe und Ausgabe von Daten, und ist mit 2 Programmspeichern 11L und 11R verbunden. Diese besitzen jeweils einen Daten-Eingang zur Programmeingabe und einen DatenAusgang für Adressen. Der Ausgang für Adressen ist jeweils mit einem Instruktions-Dekoder 10L bzw. 10R verbunden.

Die Ausgänge der Instruktions-Dekoder 10L und 10R führen zu einem Speicher 8L bzw. 8R für den Suchbereich, zu einem Speicher 9L bzw. 9R für das Meßfenster, zu einem ersten Pipeline-Register 7L bzw. 7R, zu einem Multiplexer 6L bzw. 6R, zu einem zyklischen Permutator 5L bzw. 5R und zu einem zweiten Pipeline-Register 4L bzw. 4R.

Die Speicher 8L und 9L bzw. 8R und 9R sind über jeweils acht Leitungen mit den externen Bildspeichern verbunden, in denen jeweils die vollständigen Bilder, für welche die Verschiebungsvektoren zu ermitteln sind, abgelegt sind. Jeweils 64 Ausgangsleitungen der Speicher 8L und 9L bzw. 8R und 9R führen zu den ersten Pipeline-Registern 7L bzw. 7R. Jeweils 128 Ausgangsleitungen der Pipeline-Register 7L bzw. 7R führen zu den Multiplexern 6L bzw. 6R. Jeweils 64 Ausgangsleitungen der Multiplexer 6L bzw. 6R führen zu den zyklischen Permutatoren 5L bzw. 5R. Jeweils 64 Ausgangsleitungen der zyklischen Permutatoren 5L bzw. 5R führen zu den zweiten Pipeline-Registern 4L bzw. 4R und jeweils 64 Ausgangsleitungen der Pipeline-Register 4L und 4R führen zu dem Array-Rechenwerk 1.

Das Array-Rechenwerk 1 dient zur Durchführung der mathematischen Operation $\Sigma|a-b|$, wobei parallel die Summenbildung von acht Subtraktions-und Betragsbildungsoperationen durchgeführt werden kann.

Im Akkumulator 2 werden die vom Array-Rechenwerk 1 errechneten Werte für einen Suchschritt, d.h. für die ensprechende Größe des Meßfensters, aufakkumuliert. Diese Werte werden an das Kontrollrechenwerk 3 übergben, in welchem der Verschiebungsvektor $\vec{V}$ aus dem Minimum des Abstandsmaßes $V_{dmin}$, wie in der Beschreibungseinleitung erläutert, ermittelt wird.

In die Speicher für den Suchbereich und das Meßfenster 8L, 9L, 8R, 9R werden die Daten (hier Grauwerte der Bildpunkte zu je acht bit) aus externen Bildspeichern mit wahlfreiem Zugriff (RAM), in denen vollständige Bilder abgelegt sind, bildpunktweise eingelesen. Das Auslesen aus den Speichern 8L, 9L, 8R, 9R erfolgt jeweils als ein 64 bit breite Datenwort, wobei die Daten von acht nebeneinanderliegenden Bildpunkten parallel und aneinandergekettet ausgelesen werden.

Die Anordung arbeitet in einem wechselseitigen Betrieb (Speicherwechselbetrieb) auf je zwei Speicher für Suchbereich und Meßfenster. Während die Daten von externen Bildspeichern in den Speicher 8L für den Suchbereich und den Speicher 9R für das Meßfenster eingeschrieben werden, werden gleichzeitig die Daten aus dem Speicher 8R für den Suchbereich und dem Speicher 9L für das Meßfenster ausgelesen und weiterverarbeitet. Mit jedem aufeinanderfolgenden Suchschritt wechseln diese Speicherfunktionen.

Die Multiplexer 6L, 6R dienen zum Umschalten der Datenpfade bei dem erwähnten Speicherwechselbetrieb. Die zyklischen Permutatoren 5L, 5R ordnen in Gruppen von 2 x 4 Byte jeweils 4 Byte zyklisch um. Die Möglichkeit dieser zyklischen Umordnung ist erforderlich, um die Daten der Bildpunkte des aktuellen und des vorhergehenden Bildes korrekt voneinander zu subtrahieren, da aufgrund der Speicherorganisation die Daten, die aus den Speichern ausgelesen werden, ebenfalls zyklisch vertauscht sind.

Die Pipeline-Register 4L, 7L, 4R, 7R dienen in an sich bekannter Weise zur Erhöhung der Datendurchsatzrate. Sie könnon je nach -schaltungstechnischer und technologischer Realisierung entweder entfallen oder in ihrer Anzahl geändert und/oder an anderer Stelle der Anordnung implementiert werden. Zur Anordnung gehört eine Steuerung. Sie besteht im Ausführungsbeispiel aus Instruktions-Dekoder 10L, 10R, Programmspeicher 11L, 11R und Kontrollrechenwerk 3. Diese Schaltungen können auch in einer Steuerwerkeinheit zusammengefaßt werden.

In vorteilhafter Weise läßt sich die Steuerung auf unterschiedliche Bewegungsvektor-Suchalgorithmen programmieren.

In Fig. 3 ist der Aufbau eines der Speicher 8L bis 9R am Beispeil des Specichers 8L näher erläutert. Der Speicher besteht aus vier Speichermatrizen 81 bis 84, die jeweils mit einem Spaltendekoder 21, 22, 23 bzw. 24 einem Zeilendekoder 31, 32, 33 bzw. 34 und einem Leseverstärker 41, 42, 43 bzw. 44 versehen sind. Die Daten werden vom externen Bildspeicher über die Leitung 13 eingeschrieben. Vom Instruktions-Decoder 10L (Fig. 2) über Leitungen 12 gesteuerte Datenselektionsschaltungen 51 und 42 wählen jeweils 32 bit aus den 64 bit der in den rechten und linken Speichermatrizen über die Leitungen 12 in Spalten adressierten dekodierten Daten aus, die über die Leitungen 14 zum Pipeline-Register 7L (Fig. 2) geleitet werden.

In Fig. 4 und Fig. 5 ist ein Funktionsbeispiel für eine Speicherung des Suchbereichs, beispielsweise im Speicher 8L, dargestellt. Hier wird eine numerische Zuordnung zwischen einem 28•28 Bildpunkten umfassenden Meßbereich und der physikalischen Speicherzelle, beispielsweise im Speicher 8L, getroffen. Die Lage der vier Speichermatrizen 81 bis 84 des Speichers 8L ist in den Fig. 4 und 5 mit L (links), R (rechts), O (oben) und U (unten) bezeichnet. Die Abspeicherung der Bildpunktdaten erfolgt derart, daß zum Auslesen von acht benachbarten Bildpunkten (umrahmter Bereich B in Fig. 4), angeordnet in einer 2•4 Matrix (2 Bildpunkte horizontal, 4 Bildpunkte vertikal), in jeder der vier Speichermatrizen jeweils nur eine Spalte durch die Spaltendekoder 21 bis 24 (Fig. 3) selektiert wird. Die Auswahl der Zeilen der in jeweils 8 bit Wortbreite digitalisierten Grauwerte der Bildpunktdaten erfolgt über die mit den Leseverstärkern 41 bis 44 verbundenen Daten-Selektionssschaltungen 51 und 52.

In Fig. 6 ist die im Array-Rechenwerk 1 erfolgende Summenbildung als Flußdiagramm dargestellt. Mit $a_{ik}$ ($i = 1,2$; $k = 1$ bis 4) ist jeweils der digitalisierte, 8 bit umfassende Grauwert eines Bildpunktes des aktuellen Bildes, beispielsweise der Speichermatrizen 81 bis 84 des Speichers 8L für den Suchbereich bezeichnet. Mit $b_{ik}$ ($i = 1,2$; $k = 1$ bis 4) ist jeweils der digitalisierte, 8 bit umfassende Grauwert eines Bildpunktes des vorhergehenden Bildes, beispielsweise der den Speichermatrizen 81 bis 84 entsprechenden Speichermatrizen des Speichers 9R für den Meßbereich, bezeichnet.

In den Rechenwerken 51 bis 54 werden die Betragsdifferenzen $|a_{11}-b_{11}|$ bis $|a_{14}-b_{14}|$ gebildet. Die jeweiligen Ergebnisse sind mit $s_{11}$ bis $s_{14}$ bezeichnet. Die Rechenwerke 55 bis 58 addieren zu den jeweiligen Ergebnissen die Betragsdifferenzen $|a_{21}-b_{21}|$ usw. bis $|a_{24}-b_{24}|$. Dadurch entstehen die ersten Summenergebnisse $s_{21}$ bis $s_{24}$.

In den nachfolgenden Addiergliedern 59 und 60 werden die zweiten Summenergebnisse $s_1 = s_{21} + s_{22}$ und $s_2 = s_{23} + s_{24}$ gebildet und schließlich im Addierglied 61 die Summe $s = s_1 + s_2$. Damit ist

$$s = \sum_{i=1}^{2} \sum_{k=1}^{4} \left| a_{ik} - b_{ik} \right|$$

In Fig. 7 ist eine Schaltung zur Bildung der Bettragdifferenzen zweier 8 bit umfassender Grauwerte, wie sie in jedem der Glieder 51 bis 58 der Fig. 6 erfolgt, beispielsweise für das Glied 55, ausführlich dargestellt. Die 8 bit $a_0$ bis $a_7$ a.B. des Grauwertes $a_{21}$ werden jeweils den ersten Eingängen und die invertierten 8 bit $\overline{b_0}$ bis $\overline{b_7}$ z.B. des Grauwertes $b_{21}$ den zweiten Eingängen der acht Volladdierer 511 bis 518 zugeführt.

Die jeweiligen Ausgänge der Carrierbit (Übertragsbits) $c_0$ bis $c_6$ der Volladdikerer 511 bis 517 sind jeweils mit den Carrier-Bit-Eingängen der benachbarten Volladdierer verbunden. Der Ausgang für das Carrier-Bit $c_6$ ist über einen Inverter 531 mit sämtlichen ersten Eingängen von acht Exclusiv-Oder-Gattern 521 bis 528 und mit dem Carrier-Bit-Eingang eines Volladdierers 541 von acht weiteren Volladdierern 541 bis 548 verbunden.

Die Ausgänge der Exclusiv-Oder-Gatter 521 bis 528 sind jeweils an acht erste Eingänge der 8 weiteren Volladdierern 541 bis 548 angeschlossen, dessen jeweils zweitem Eingang jeweils ein Bit der Betragsdifferenz $s_{11}$ zugeführt wird (im Fall der Glieder 51 bis 54 ist dieser Eingang auf den binären Wert "O" geschaltet).

Den acht Ausgängen der Volladdierer 541 bis 548 werden die einzelnen Bits der Summe $s_{21}$ entnommen. Die übrigen Addierglieder 59 bis 61 entsprechen dem Stand der Technik, so daß sich deren Beschreibung erübrigt.

Mittels der Programmspeicher 11L und 11R werden die Suchschrittadressen für die in Fig. 2 gezeigte Anordnung erzeugt und damit die gewünschten Bildpunktdaten (Grauwerte) in dem Array-Rechenwerk eingelesen und verarbeitet. Sobald vom Kontrollrechenwerk 3 nach einer vorgegebenen Anzahl von Verschiebungsvektorsuchen der kleinste Wert des Ausgangs des Addierers 61 und dessen zugehörige Adresse zu finden ist, werden vom Kontrollrechenwerk die Komponenten des Verschiebungsvektors ausgegeben.

## Ansprüche

1. Schaltungsanordnung zur Verschiebungsvektorsuche in der digitalen Bildanalyse, bei der die Bildpunktdaten zweier zeitlich aufeinanderfolgender Bilder, bestehend aus digitalisierten Grauwerten der Bildpunkte und eingeteilt in ein regelmäßiges Blockraster, die Verschiebung von einander zugeordneten Blöcken in den zeitlich aufeinanderfolgenden Bildern ermittelt wird, indem die Summen der Betragsdifferenzen von Untermengen der Bildpunktdaten der einander zugeordneten Blöcke gebildet werden, das Minimum dieser Summen ermittelt wird (Ermittlung des besten Korrelates von Grauwertgebirgen) und hieraus die Verschiebungen (die Verschiebungsvektoren) der Blöcke ermittelt werden,
dadurch gekennzeichnet, daß ein Array-Rechenwerk (1) mit einer Vielzahl von Bildpunktdateneingängen vorgesehen ist, in dem für jede Korrelatsermittlung die Summe der Betragsdifferenzen für mehr als ein einander zugeordnetes Bildpunktpaar parallel berechnet wird,
daß dem Array-Rechenwerk (1) ein Akkumulator-Rechenwerk (2) nachgeschaltet ist, in welchem die Summen der Betragsdifferenzen aufaddiert werden und,
daß an das Akkumulator-Rechenwerk (2) ein Kontroll-Rechenwerk (3) angeschlossen ist, das durch Ermittlung des Minimums der bei jeder Bildverschiebung ermittelten aufaddierten Summe der Betragsdifferenzen die Komponenten des Verschiebungsvektors ( $\vec{V}$ ) bestimmt.

2. Schaltungsanordnung nach Anspruch 1, dadurch gekennzeichnet, daß die Bildpunktdaten mit der Wortbreite N seriell in Speicher (8L, 8R, 9L, 9R) eingeschrieben und parallel mit der Wortbreite M x N (M = natürliche Zahl >1) zum Array-Rechenwerk (1) übertragen werden.

3. Schaltungsanordnung nach Anspruch 2, dadurch gekennzeichnet, daß die Speicher jeweils aus einem Speicher (8L) für den Suchbereich und einem Speicher (9L) für das Meßfenster bestehen, die über die Reihenschaltung eines ersten Pipelineregisters (7L), eines Multiplexers (6L), eines zyklischen Permutators (5L) und eines zweiten Pipelineregisters (4L) mit dem Array-Rechenwerk (1) verbunden sind.

4. Schaltungsanordnung nach Anspruch 3, dadurch gekennzeichnet, daß die Speicher (8L, 9L) und die Schaltungsteile (7L, 6L, 5L, 4L) an eine programmierbare Steuerschaltung angeschlossen sind.

5. Schaltungsanordnung nach Anspruch 4, dadurch gekennzeichnet, daß die Speicher für den Suchbereich (8L) und das Meßfenster (9L), sowie die zwischen den Speichern (8L, 9L) und dem Array-Rechenwerk (1) angeordnete Reihenschaltungen (7L, 6L, 5L, 4L) mindestens zweifach vorhanden sind.

6. Schaltungsanordnung nach Anspruch 4 oder 5, dadurch gekennzeichnet, daß die programmierbare Steuerschaltung aus einem Instruktions-Decoder (10), einem Programmspeicher (11) und dem Kontroll-Rechenwerk (3) besteht.

7. Schaltungsanordnung nach einem der Ansprüche 1 bis 5, dadurch gekennzeichnet, daß innerhalb eines Meßfensters zur Berechnung der Summe der Betragsdifferenzen eine nach vorgegebenem Muster ausgewählte Untermenge von Bildpunkten vorgesehen ist.

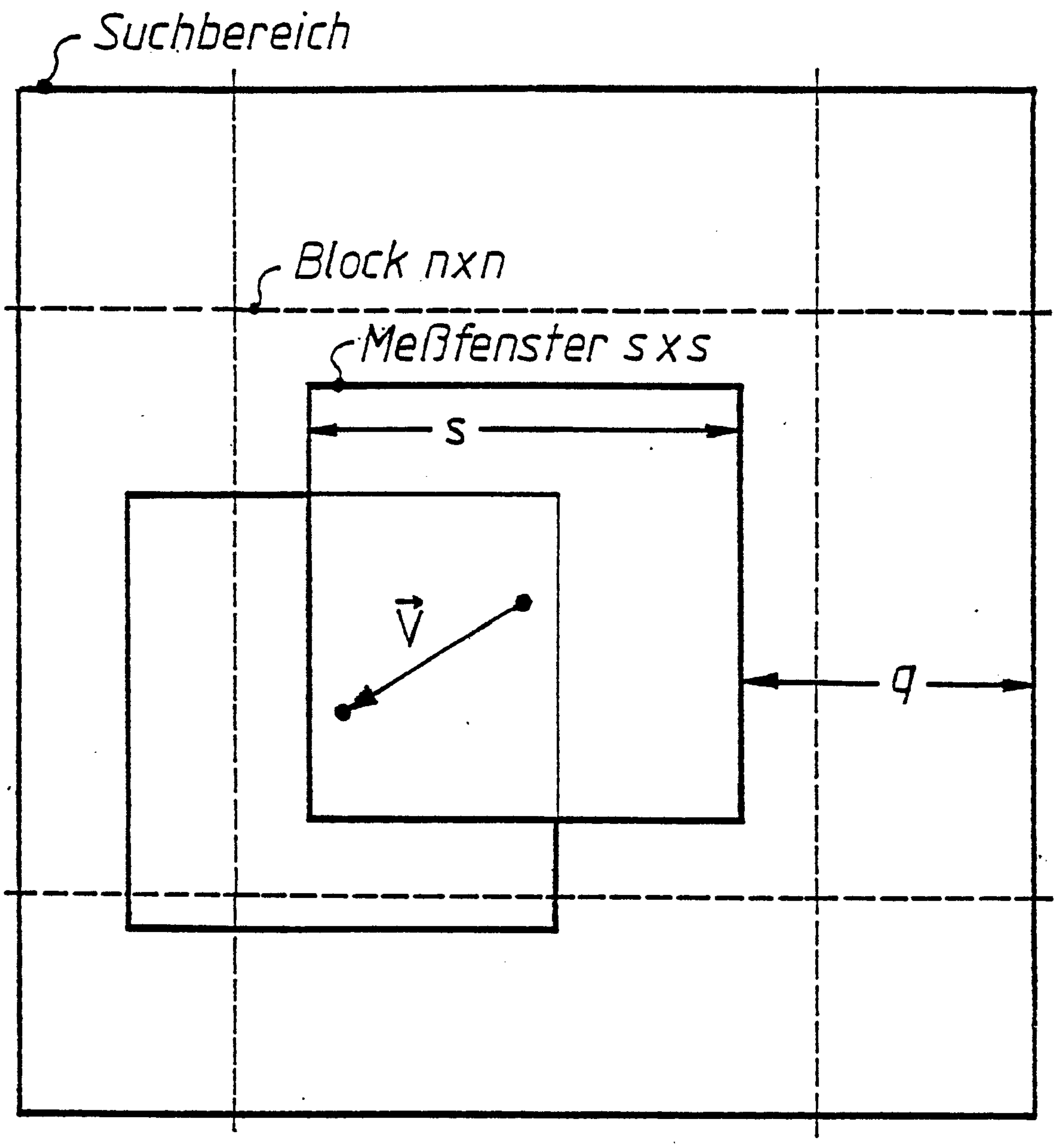


Fig. 1

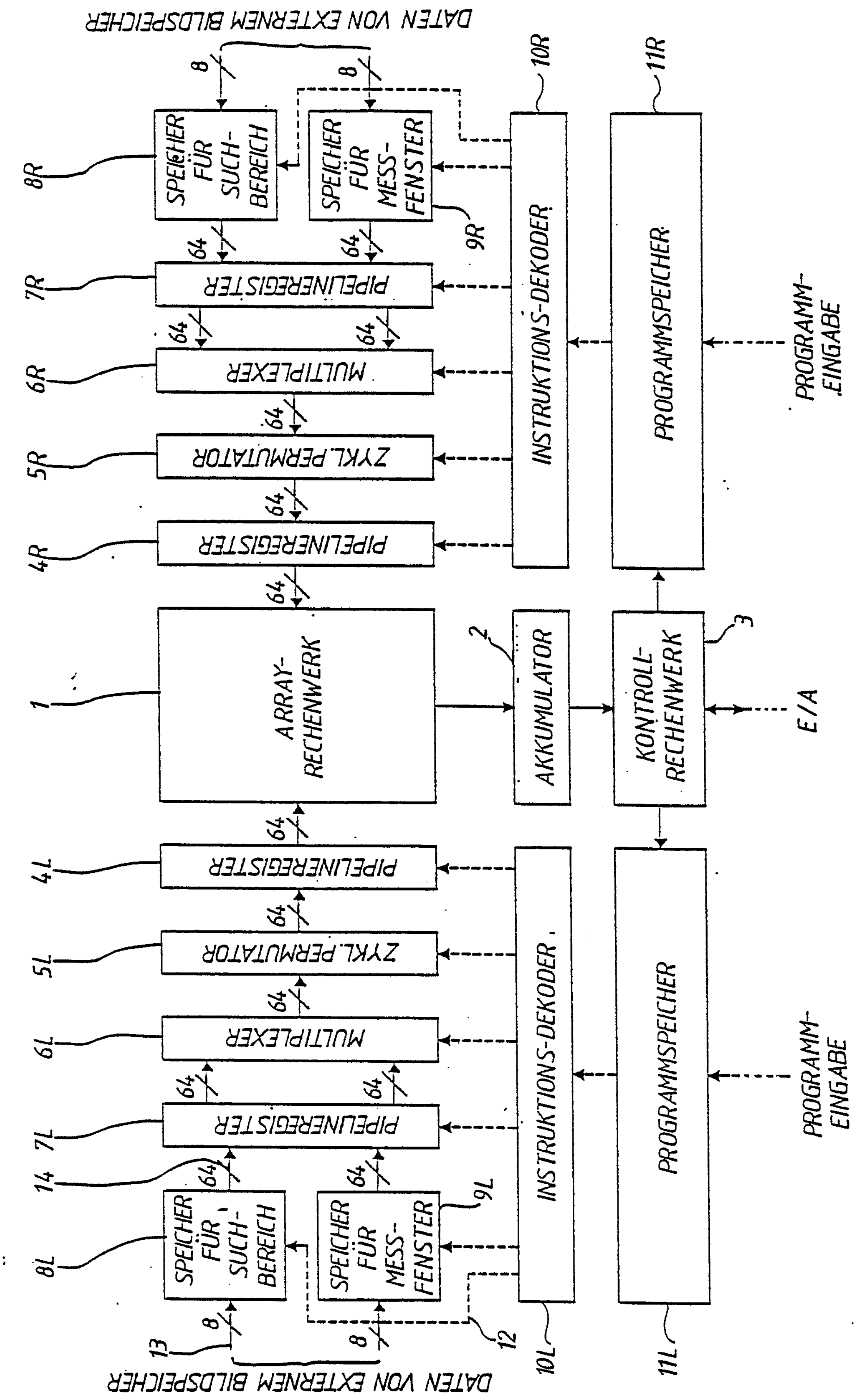
DATEN VON EXTERNEM BILDSPEICHER
8
8
SPEICHER FÜR SUCH-BEREICH
SPEICHER FÜR MESS-FENSTER
8R
9R
10R
11R
64
PIPELINEREGISTER
7R
MULTIPLEXER
6R
ZYKL.PERMUTATOR
5R
PIPELINEREGISTER
4R
INSTRUKTIONS-DEKODER
PROGRAMMSPEICHER
PROGRAMM-EINGABE
ARRAY-RECHENWERK
1
AKKUMULATOR
2
KONTROLL-RECHENWERK
3
E/A
PIPELINEREGISTER
4L
ZYKL.PERMUTATOR
5L
MULTIPLEXER
6L
PIPELINEREGISTER
7L
14
INSTRUKTIONS-DEKODER
PROGRAMMSPEICHER
PROGRAMM-EINGABE
SPEICHER FÜR SUCH-BEREICH
SPEICHER FÜR MESS-FENSTER
8L
9L
13
12
10L
11L
DATEN VON EXTERNEM BILDSPEICHER

Fig. 2

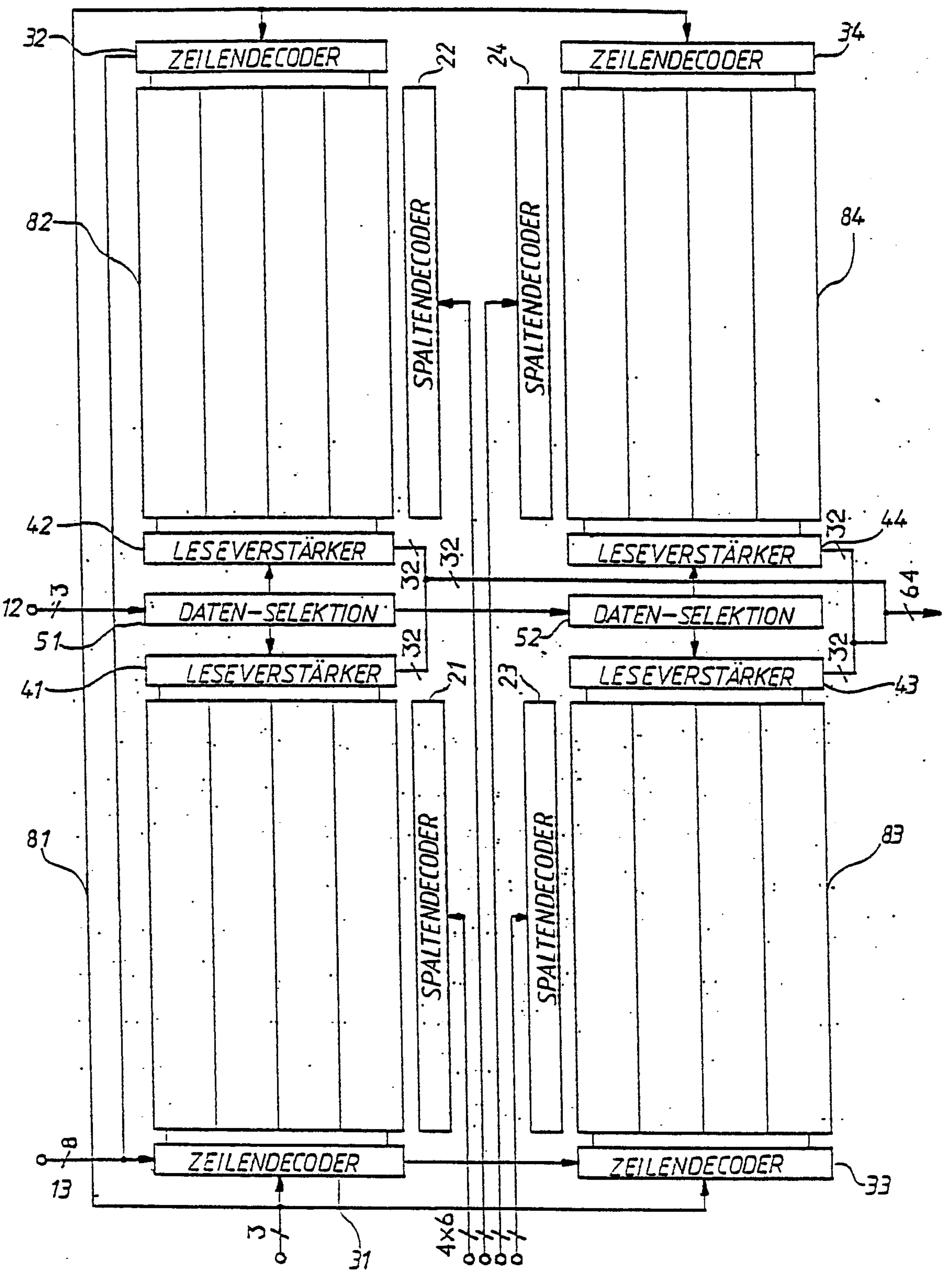

ZEILENDECODER
ZEILENDECODER
SPALTENDECODER
SPALTENDECODER
LESEVERSTÄRKER
LESEVERSTÄRKER
DATEN-SELEKTION
DATEN-SELEKTION
LESEVERSTÄRKER
LESEVERSTÄRKER
SPALTENDECODER
SPALTENDECODER
ZEILENDECODER
ZEILENDECODER
32
34
22
24
82
84
42
44
12
3
51
52
64
41
43
21
23
81
83
8
13
31
33
4x6


Fig. 3

| | O | U | O | U | O | U | O | ... | U | O | ... | O | U | O | U | O | U |
|---|---|---|---|---|---|---|---|---|---|---|---|---|---|---|---|---|---|
| L | Ø | 1 | 2 | 3 | 4 | 5 | 6 | ... | | | ... | 22 | 23 | 24 | 25 | 26 | 27 |
| | 28 | 29 | 3Ø | 31 | 32 | 33 | 34 | ... | | | ... | 5Ø | 51 | 52 | 53 | 54 | 55 |
| | 56 | 57 | 58 | 59 | 6Ø | 61 | 62 | ... | | | ... | 78 | 79 | 8Ø | 81 | 82 | 83 |
| | 84 | 85 | 86 | 87 | 88 | 89 | 9Ø | ... | | | ... | 1Ø6 | 1Ø7 | 1Ø8 | 1Ø9 | 11Ø | 111 |
| R | 112 | 113 | 114 | 115 | 116 | 117 | 118 | ... | | | ... | 134 | 135 | 136 | 137 | 138 | 139 |
| | 14Ø | 141 | 142 | 143 | 144 | 145 | 146 | ... | | | ... | 162 | 163 | 164 | 165 | 166 | 167 |
| | 168 | 169 | 17Ø | 171 | 172 | 173 | 174 | ... | | | ... | 19Ø | 191 | 192 | 193 | 194 | 195 |
| | 196 | 197 | 198 | 199 | 2ØØ | 2Ø1 | 2Ø2 | ... | 2Ø5 | 2Ø6 | ... | 218 | 219 | 22Ø | 221 | 222 | 223 |
| L | 224 | 225 | 226 | 227 | 228 | 229 | 23Ø | ... | 233 | 234 | ... | 246 | 247 | 248 | 249 | 25Ø | 251 |
| | 252 | 253 | 254 | 255 | 256 | 257 | 258 | ... | 261 | 262 | ... | 274 | 275 | 276 | 277 | 278 | 279 |
| | 28Ø | 281 | 282 | 283 | 284 | 285 | 286 | ... | 289 | 29Ø | ... | 3Ø2 | 3Ø3 | 3Ø4 | 3Ø5 | 3Ø6 | 3Ø7 |
| | 3Ø8 | 3Ø9 | 31Ø | 311 | 312 | 313 | 314 | ... | | | ... | 33Ø | 331 | 332 | 333 | 334 | 335 |
| R | . | . | . | . | . | . | . | ... | | | ... | . | . | . | . | . | . |
| L | . | . | . | . | . | . | . | ... | | | ... | . | . | . | . | . | . |
| R | . | . | . | . | . | . | . | ... | | | ... | . | . | . | . | . | . |
| L | 672 | 673 | 674 | 675 | 676 | 677 | 678 | ... | | | ... | 694 | 695 | 696 | 697 | 698 | 699 |
| | 7ØØ | 7Ø1 | 7Ø2 | 7Ø3 | 7Ø4 | 7Ø5 | 7Ø6 | ... | | | ... | 722 | 723 | 724 | 725 | 726 | 727 |
| | 728 | 729 | 73Ø | 731 | 732 | 733 | 734 | ... | | | ... | 75Ø | 751 | 752 | 753 | 754 | 755 |
| | 756 | 757 | 758 | 759 | 76Ø | 761 | 762 | ... | | | ... | 778 | 779 | 78Ø | 781 | 782 | 783 |

B

8L

Fig. 4

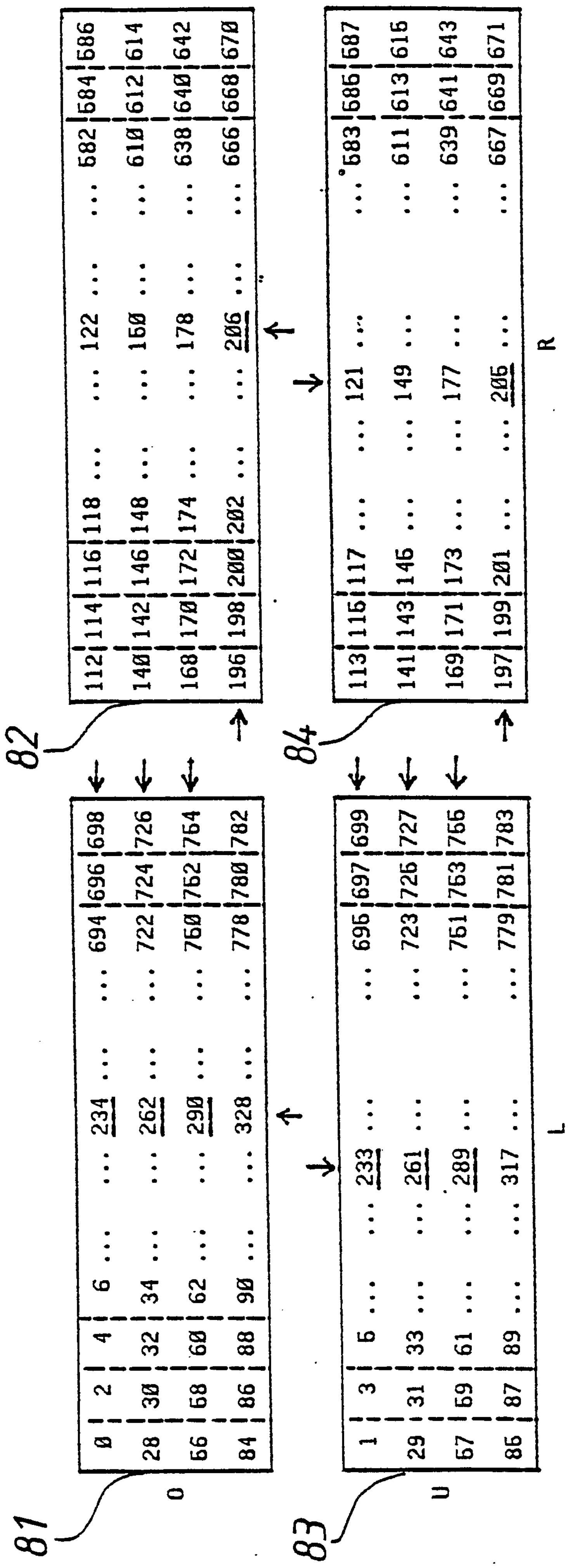


Fig. 5

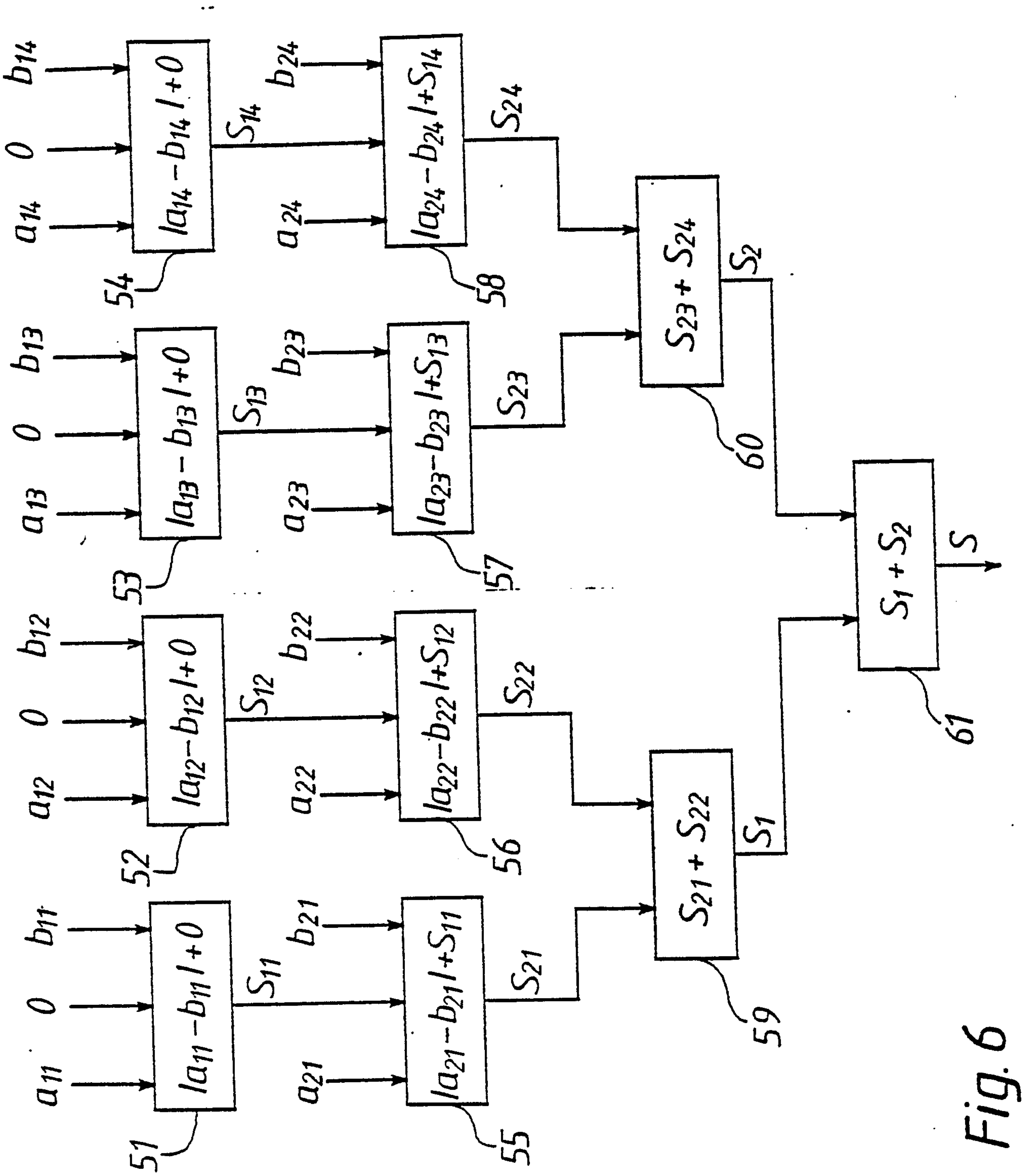

a11 0 b11
|a11 − b11| + 0
51
S11
a21 b21
|a21 − b21| + S11
55
S21
a12 0 b12
|a12 − b12| + 0
52
S12
a22 b22
|a22 − b22| + S12
56
S22
S21 + S22
59
S1
a13 0 b13
|a13 − b13| + 0
53
S13
a23 b23
|a23 − b23| + S13
57
S23
a14 0 b14
|a14 − b14| + 0
54
S14
a24 b24
|a24 − b24| + S14
58
S24
S23 + S24
60
S2
S1 + S2
61
S


Fig. 6

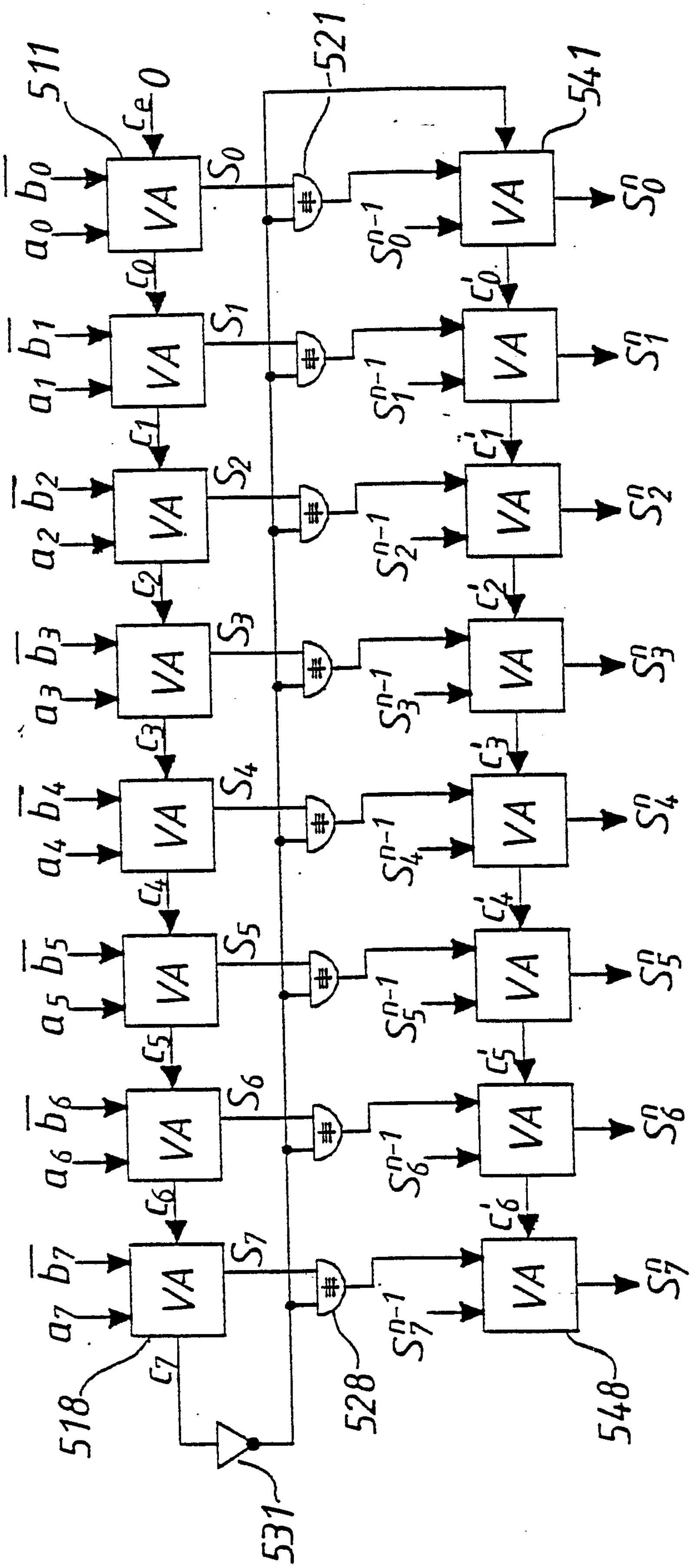

511
521
541
518
528
531
548
VA
$c_e$ 0
$a_0$ $\overline{b_0}$
$a_1$ $\overline{b_1}$
$a_2$ $\overline{b_2}$
$a_3$ $\overline{b_3}$
$a_4$ $\overline{b_4}$
$a_5$ $\overline{b_5}$
$a_6$ $\overline{b_6}$
$a_7$ $\overline{b_7}$
$S_0$ $S_1$ $S_2$ $S_3$ $S_4$ $S_5$ $S_6$ $S_7$
$c_0$ $c_1$ $c_2$ $c_3$ $c_4$ $c_5$ $c_6$ $c_7$
$c'_0$ $c'_1$ $c'_2$ $c'_3$ $c'_4$ $c'_5$ $c'_6$
$S_0^{n-1}$ $S_1^{n-1}$ $S_2^{n-1}$ $S_3^{n-1}$ $S_4^{n-1}$ $S_5^{n-1}$ $S_6^{n-1}$ $S_7^{n-1}$
$S_0^n$ $S_1^n$ $S_2^n$ $S_3^n$ $S_4^n$ $S_5^n$ $S_6^n$ $S_7^n$


Fig. 7

Europäisches Patentamt

# EUROPÄISCHER RECHERCHENBERICHT

Nummer der Anmeldung

EP 87 11 8283

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-4 460 923 (HIRANO et al.)<br>* Spalte 9, Zeile 39 - Spalte 12, Zeile 15 *<br>--- | 1-6 | H 04 N 7/137<br>G 06 F 15/70 |
| Y | THE 8TH ANNUAL SYMPOSIUM ON COMPUTER ARCHITECTURE, 12.-14. Mai 1981, Seiten 21-35, Minneapolis, Minnesota, US; D.P. AGRAWAL: "A pipelined pseudoparallel system architecture for motion analysis"<br>* Seite 22, rechte Spalte, Zeile 32 - Seite 27, linke Spalte, Zeile 19 *<br>--- | 1-6 | |
| A | US-A-4 562 468 (KOGA)<br>* Spalte 6, Zeile 48 - Spalte 7, Zeile 60 *<br>--- | 1 | |
| A | ELECTRONICS AND COMMUNICATIONS IN JAPAN, 1, Band 69, Nr. 4, Teil 1, April 1986, Seiten 65-74, Scripta Technica, Inc.; H. KURODA et al.: "An interframe coding system using motion-compensation prediction and uncovered background prediction"<br>* Seite 68, rechte Spalte, Zeile 9 - Seite 69, Zeile 17 *<br>--- | 1 | **RECHERCHIERTE SACHGEBIETE (Int. Cl.4)**<br>H 04 N<br>G 06 F |
| A | IEEE INTERNATIONAL CONFERENCE ON ACOUSTICS, SPEECH AND SIGNAL PROCESSING, Band 1, 26.-29. März 1985, Seiten 359-362, IEEE, New York, US; K.-H. TZOU et al.: "Block-recursive matching algorithm (BRMA) for displacement estimation of video images"<br>--- -/- | | |

Der vorliegende Recherchenbericht wurde für alle Patentansprüche erstellt

| Recherchenort | Abschlußdatum der Recherche | Prüfer |
|---|---|---|
| DEN HAAG | 06-04-1988 | VERSCHELDEN J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)

Europäisches Patentamt

# EUROPÄISCHER RECHERCHENBERICHT

Nummer der Anmeldung

EP 87 11 8283

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | IEEE TRANSACTIONS ON COMMUNICATIONS, Band COM-33, Nr. 8, August 1985, Seiten 888-896, IEEE, New York, US; R. SRINIVASAN et al.: "Predictive coding based on efficient motion estimation"<br>--- | | |
| A | EP-A-0 180 446 (SONY CORP.)<br>----- | | |
| | | | RECHERCHIERTE SACHGEBIETE (Int. Cl.4) |

Der vorliegende Recherchenbericht wurde für alle Patentansprüche erstellt

| Recherchenort | Abschlußdatum der Recherche | Prüfer |
|---|---|---|
| DEN HAAG | 06-04-1988 | VERSCHELDEN J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)